# EUROPÄISCHE PATENTSCHRIFT

(11) **EP 1 225 067 B1**
(45) Veröffentlichungstag und Bekanntmachung des Hinweises auf die Patenterteilung: **11.08.2004**
(21) Anmeldenummer: 01128960.0
(22) Anmeldetag: 06.12.2001
(51) Int. Cl.: B60D 1/54, B60D 1/06

(54) **Anhängerkupplung**
Trailer coupling
Attelage de remorque

(30) Priorität: 23.01.2001 DE 10104185
(43) Veröffentlichungstag der Anmeldung: 24.07.2002
(73) Patentinhaber: FAC Frank Abels Consulting & Technology GmbH, 29633 Munster (DE)
(72) Erfinder: Abels, Frank, 29633 Munster (DE)
(74) Vertreter: Reimold, Otto, Dipl.-Phys.Dr.

(56) Entgegenhaltungen:
- EP-A- 1 024 036
- EP-A- 1 090 782
- EP-A- 1 153 770
- WO-A-98/57813
- DE-A- 19 848 487

## Beschreibung

Die Erfindung betrifft eine Anhängerkupplung für Kraftfahrzeuge, insbesondere Personenkraftwagen, mit einem Kupplungsarm, der an seinem freien Ende ein hochstehend angeordnetes Kopfstück zum lösbaren Befestigen eines Anhängers trägt und mittels einer Motoranordnung zwischen einer im am Fahrzeug montierten Zustand nach hinten gerichteten Gebrauchsstellung und einer weiter vorne angeordneten Nichtgebrauchsstellung verstellbar ist, wobei der Kupplungsarm mit einem Drehachsglied fest verbunden ist, das in einer Drehlagereinrichtung verdrehbar gelagert ist, so dass beim Verdrehen des Drehachsglieds der Kupplungsarm um die Achslinie des Drehachsglieds schwenkt und das Kopfstück dabei seine Lage in Fahrzeug-Längsrichtung verändert, wobei die Drehlagereinrichtung um eine im Wesentlichen in Fahrzeug-Längsrichtung gerichtete Schwenkachse schwenkbar ist, so dass der Kupplungsarm beim Verschwenken der Drehlagereinrichtung eine Hoch-Tief-Bewegung ausführt, und wobei der Gebrauchsstellung und der Nichtgebrauchsstellung des Kupplungsarms jeweils ein Endanschlag zugeordnet ist (eine solche Anhängerkupplung gilt als bekannt).

Feststehende Anhängerkupplungen, die mit ihrem Kupplungsarm unterhalb des rückseitigen Stoßfängers des Fahrzeugs nach hinten hin vorstehen, beeinträchtigen den optischen Eindruck insbesondere von Personenkraftwagen. Daher scheuen manche Fahrzeugbesitzer den Anbau einer solchen Kupplung und verzichten somit auf die Möglichkeit, einen Anhänger an ihr Fahrzeug ankuppeln zu können.

Eine aus der nicht vorveröffentlichtendeutschen Patentanmeldung 100 23 640.5 (der EP-A-1 153 770 entsprechend) hervorgehende Anhängerkupplung mit den eingangs genannten Merkmalen schafft hier Abhilfe. Bei ihr ist der Kupplungsarm, wird die Anhängerkupplung nicht benötigt, in der Nichtgebrauchsstellung sozusagen versteckt untergebracht, so dass er dem Blick eines Betrachters entzogen ist. Will der Fahrer die Anhängerkupplung benutzen, muss er lediglich ein im Innenraum des Fahrzeugs in seiner Reichweite oder beispielsweise im Kofferraum angeordnetes Bedienelement betätigen. Hierdurch wird die Motoranordnung in Gang gesetzt, so dass der Kupplungsarm eine gesteuerte Bewegung ausführt und in seine Gebrauchsstellung gelangt. Das Zurückbewegen in die Nichtgebrauchsstellung kann mittels des gleichen oder eines weiteren Bedienelements erfolgen.

Der vorliegenden Erfindung liegt die Aufgabe zu Grunde, eine Anhängerkupplung mit einem verhältnismäßig einfachen Aufbau und unkompliziertem Bewegungsablauf zu schaffen.

Diese Aufgabe wird durch eine Anhängerkupplung gelöst, die die eingangs genannten Merkmale aufweist, darduch gekennzeichnet daß die Drehlagereinrichtung in der Gebrauchsstellung und in der Nichtgebrauchsstellung jeweils eine mit Bezug auf eine während des Verdrehens des Drehachsgliedes eingenommene untere Schwenklage nach oben geschwenkte Schwenk-Endlage einnimmt, wobei die beiden Schwenk-Endlagen, ausgehend von der unteren Schwenklage, zur gleichen Seite hin verschwenkt sind.

Auf diese Weise ergibt sich ein Bewegungsablauf, bei dem der Kupplungsarm in der unteren Schwenklage des Drehachsgliedes weiter nach unten abgesenkt ist als in der Gebrauchsstellung und in der Nichtgebrauchsstellung, so dass er auch unter einem verhältnismäßig tief sitzenden Teil des Kraftfahrzeugs sozusagen durchtauchen kann.

Zweckmäßigerweise ist vorgesehen, dass die Drehlagereinrichtung in der Nichtgebrauchsstellung um einen größeren Schwenkwinkel als in der Gebrauchsstellung nach oben geschwenkt ist. Dies wird bei einer bevorzugten Ausführungsform dadurch erreicht, dass mit dem Drehachsglied ein außerhalb der Drehlagereinrichtung angeordnetes Anschlagelement drehfest verbunden ist, das in der der Nichtgebrauchsstellung entsprechenden Drehlage des Drehachsglieds beim Verschwenken der Drehlagereinrichtung eine abseits des der Gebrauchslage zugeordneten Endanschlags verlaufende Bewegungsbahn und in der der Gebrauchsstellung entsprechenden Drehlage des Drehachsglieds beim Verschwenken der Drehlagereinrichtung eine den der Gebrauchslage zugeordneten Endanschlag enthaltende Bewegungsbahn durchläuft. Auf diese Weise kann sich das Anschlagelement beim nach unten Schwenken der Drehlagereinrichtung aus der Nichtgebrauchsstellung an dem der Gebrauchsstellung zugeordneten Endanschlag vorbeibewegen. Beim anschließenden Hochschwenken aus der unteren Schwenklage in die Gebrauchsstellung ist das Drehachsglied dagegen so verdreht, dass das Anschlagelement in der Gebrauchsstellung an dem dieser zugeordneten Endanschlag zur Anlage gelangt.

Die Motoranordnung kann einen der Drehlagereinrichtung zu ihrem Verschwenken zugeordneten Schwenkmotor enthalten, der die den Endanschlägen zugeordneten und die Schwenkbewegung mitmachenden Teile gegen die Endanschläge bewegt. In diesem Zusammenhang ist es von Vorteil, dass eine die Stromversorgung der elektrischen Motoranordnung steuernde Steuereinheit mit einer Abschalteinrichtung zum Abschalten der Stromversorgung beim Eintreffen des Kupplungsarms in der Nichtgebrauchsstellung und in der Gebrauchsstellung in Abhängigkeit von dem dabei durch das Anschlagen an dem jeweiligen Endanschlag auftretenden Anstieg der Stromstärke vorhanden ist.

Ein durch Vibrationen und Stöße während des Fahr- und Schleppbetriebs eventuell auftretendes Spiel kann durch regelmäßiges Nachstellen beseitigt werden. Hierzu kann die Steuereinheit eine Nachstelleinrichtung enthalten, die, befindet sich der Kupplungsarm in der Nichtgebrauchsstellung bzw. in der Gebrauchsstellung, in zeitlichen Intervallen die Stromversorgung in Gang setzt. Auf diese Weise erfolgt ein dauerndes Nachstellen, so dass ein eventuelles Spiel beseitigt wird.

Weitere zweckmäßige Ausgestaltungen der Erfindung sind in den Unteransprüchen angegeben.

Ein Ausführungsbeispiel der Erfindung wird nun anhand der Zeichnung erläutert. Es zeigen:
- Figur 1: eine erfindungsgemäße Anhängerkupplung in Explosionsdarstellung in Schrägansicht, wobei der Schwenkmotor nicht eingezeichnet ist,
- Figur 2: den Heckbereich eines Kraftfahrzeugs im in Fahrzeug-Längsrichtung gelegten Schnitt, wobei die montierte Anhängerkupplung in schematischer Seitenansicht gezeichnet ist und sich in ihrer Gebrauchsstellung befindet,
- Figur 3: die am Fahrzeug montierte Anhängerkupplung in der Nichtgebrauchsstellung in schematischer Rückansicht gemäß Pfeil III in Figur 2, wobei der Trägerarm mit der elektrischen Anschlusseinrichtung weggelassen ist,
- Figur 4: die Anordnung nach Figur 3 ohne die kraftfahrzeugseitigen Teile und den Schwenkmotor, jedoch mit dem die elektrische Anschlusseinrichtung aufweisenden Trägerarm, in vergrößerter Teildarstellung, wobei die hintere Halteplatte der Schwenklagereinrichtung weggelassen ist,
- Figur 5: eine der Figur 3 entsprechende Darstellung, wobei die Drehlagereinrichtung nach unten in ihre untere Schwenklage verschwenkt ist und das Drehachsglied mit dem Kupplungsarm noch die der Nichtgebrauchsstellung entsprechende Drehlage einnimmt,
- Figur 6: eine der Figur 4 entsprechende Darstellung, jedoch in der aus Figur 5 hervorgehenden Lage,
- Figur 7: eine den Figuren 3 und 5 entsprechende Darstellung, wobei sich die Drehlagereinrichtung wie in Figur 5 in ihrer unteren Schwenklage befindet, das Drehachsglied mit dem Kupplungsarm jedoch in die der Gebrauchsstellung entsprechende Drehlage verdreht ist,
- Figur 8: eine den Figuren 4 und 6 entsprechende Darstellung, jedoch in der der Figur 7 entsprechenden Lage,
- Figur 9: eine den Figuren 3, 5 und 7 entsprechende Darstellung, wobei die Drehlagereinrichtung mit Bezug auf Figur 7 unter Beibehaltung der Drehlage des Drehachsglieds mit dem Kupplungsarm nach oben geschwenkt ist, so dass der Kupplungsarm seine Gebrauchsstellung einnimmt, und
- Figur 10: eine den Figuren 4, 6 und 8 entsprechende Darstellung, jedoch in der aus Figur 9 hervorgehenden Lage.

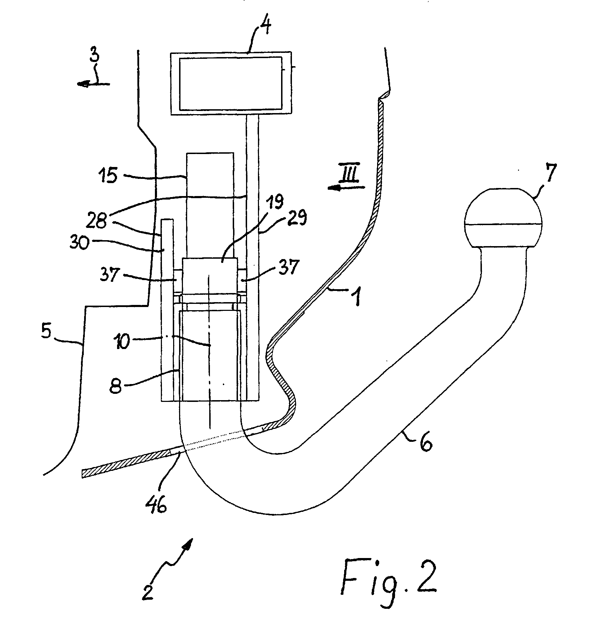

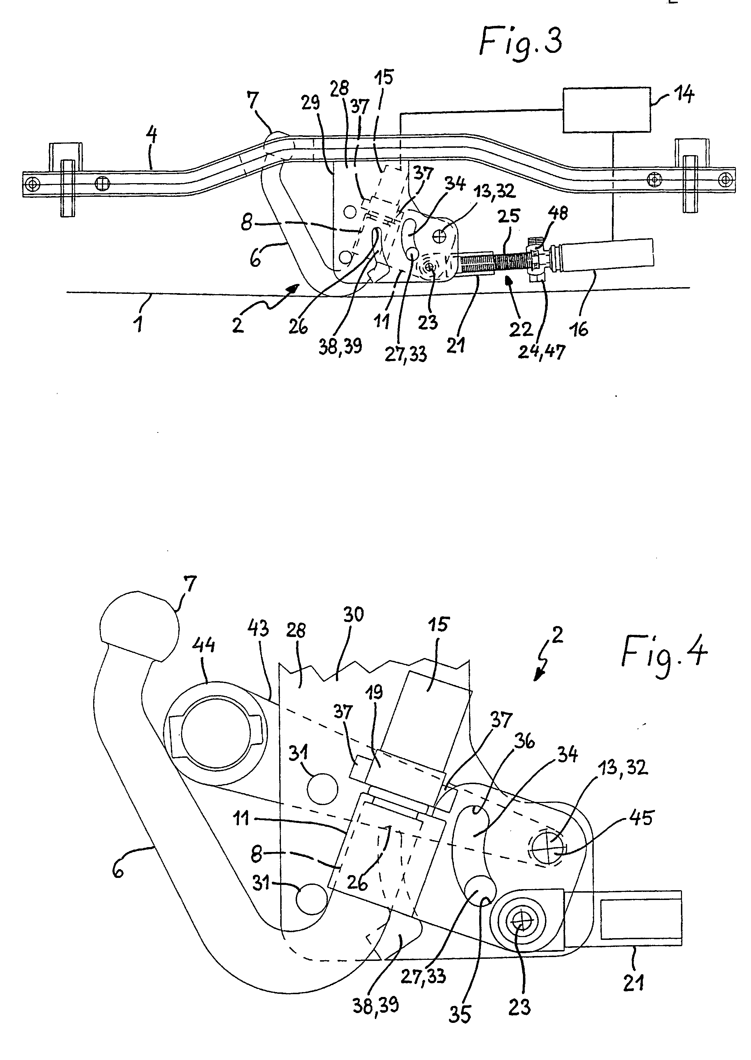

In der Zeichnung ist die einen hinteren Stoßfänger bildende Heckschürze 1 eines Personenkraftwagens angedeutet (in die Figuren 3, 5, 7 und 9 wurde nur die Unterkante der Heckschürze 1 eingezeichnet), in deren Bereich eine Anhängerkupplung 2 angeordnet ist. Dabei ist die Anhängerkupplung 2 vor (mit "vorne" ist die der Fahrtrichtung 3 entsprechende Richtung zum vorderen Fahrzeugende hin gemeint) der Heckschürze 1 fest mit dem Fahrzeugchassis verbunden, beispielsweise mit einem fahrzeugfesten, quer zur Fahrtrichtung 3 verlaufenden Querträger 4. Die beim Ziehen eines Anhängers auftretenden Kräfte werden über den Querträger 4 in das Fahrzeugchassis eingeleitet. In Figur 2 ist vom Fahrzeug außerdem noch die Kofferraum-Rückwand 5 angedeutet.

Die Anhängerkupplung 2 weist, wie bei Anhängerkupplungen allgemein üblich, einen Kupplungsarm 6 auf, der einenends, an seinem freien Ende, ein hochstehend angeordnetes Kopfstück 7 kugeliger Gestalt trägt, an dem ein Anhänger lösbar befestigt werden kann. An seinem entgegengesetzten Ende ist der Kupplungsarm 6 mit einem ebenfalls hochstehenden Drehachsglied 8 fest, beim Ausführungsbeispiel einstückig, verbunden, das einen Lagerabschnitt 9 bildet, mit dem das Drehachsglied 8 um seine Achslinie 10 verdrehbar in einer Drehlagereinrichtung 11 gelagert ist, so dass beim Verdrehen des Drehachsgliedes 8 der Kupplungsarm 6 um die Achslinie 10 schwenkt und das Kopfstück 7 dabei seine Lage in Fahrzeug-Längsrichtung 3 verändert.

Beim Ausführungsbeispiel ist die Drehlagereinrichtung 11 zweiteilig ausgebildet und wird von zwei von entgegengesetzten Seiten her an den Lagerabschnitt 9 des Drehachsgliedes 8 angesetzten Lagerteilen 11a, 11b gebildet, die eine Lagerschale 12a, 12b zur Aufnahme des Lagerabschnitts 9 bilden.

Das Drehachsglied 8 ist im Wesentlichen rechtwinkelig zur Fahrzeug-Längsrichtung 3 ausgerichtet.

Die Drehlagereinrichtung 11 ist um eine fahrzeugfest anzuordnende Schwenkachse 13 schwenkbar, die im Wesentlichen im Fahrzeug-Längsrichtung 3 verläuft, so dass der Kupplungsarm 6 beim Verschwenken der Drehlagereinrichtung 11 um die Schwenkachse 13 eine Hoch-Tief-Bewegung ausführt.

Der Kupplungsarm 6 weist somit zwei Freiheitsgrade (Verdrehen des Drehachsgliedes 8 in der Drehlagereinrichtung 11 um die Achslinie 10 und Verschwenken der Drehlagereinrichtung 11 um die Schwenkachse 13) auf, so dass der Kupplungsarm 6 und mit diesem das Kopfstück 7 zwischen einer im am Fahrzeug montierten Zustand nach hinten gerichteten Gebrauchsstellung (Figuren 2, 9 und 10) und einer weiter vorne und höher angeorndeten Nichtgebrauchsstellung (Figuren 3 und 4) hin und her verstellbar ist. In der Nichtgebrauchsstellung befindet sich der Kupplungsarm 6 mit dem Kopfstück 7 vor der Heckschürze 1, so dass er nach hinten hin verdeckt angeordnet ist. Die Heckschürze 1 dient somit als Sichtabdeckung, die den in seiner Nichtgebrauchsstellung befindlichen Kupplungsarm 6 unsichtbar macht. Dabei verläuft der Kupplungsarm 6 in seiner Nichtgebrauchsstellung im Wesentlichen quer zur Fahrzeug-Längsrichtung 3 der Heckschürze 1 entlang zur Seite hin. Prinzipiell könnte der Kupplungsarm in seiner Nichtgebrauchsstellung auch vor einem anderen Fahrzeugteil als der Heckschürze 1 versteckt untergebracht sein.

In seiner Gebrauchsstellung steht der Kupplungsarm 6 dagegen nach hinten hin vor die Heckschürze 1 vor, so dass das Kopfstück 7 zugänglich ist und ein Anhänger angekuppelt werden kann. In der Gebrauchsstellung steht das Drehachsglied 8 beim Ausführungsbeispiel im Wesentlichen vertikal.

Die Verstellung des Kupplungsarms 6 zwischen der Nichtgebrauchsstellung und der Gebrauchsstellung sowie umgekehrt erfolgt mittels einer elektrischen Motoranordnung, der eine die Stromversorgung steuernde Steuereinheit 14 (nur in Figur 3 schematisch angedeutet) zugeordnet ist. Der Motoranordnung ist ferner mindestens ein Bedienelement im Fahrzeug-Innenraum oder beispielsweise auch im Kofferraum zugeordnet, bei dessen Betätigen die Motoranordnung eingeschaltet wird, wonach die Bewegung des Kupplungsarms 6 durch die vorhandene Steuerung selbsttätig abläuft, bis der Kupplungsarm 6 in der Gebrauchsstellung bzw. in der Nichtgebrauchsstellung eintrifft. Die Stromversorgung der Motoranordnung erfolgt vom Bordnetz des Kraftfahrzeugs her. Die zugehörigen Leitungen und Elektronikelemente wurden, sieht man von der angedeuteten Steuereinheit 14 ab, in der Zeichnung weggelassen. Die entsprechende Beschaltung kann von einem Fachmann ohne weiteres durchgeführt werden.

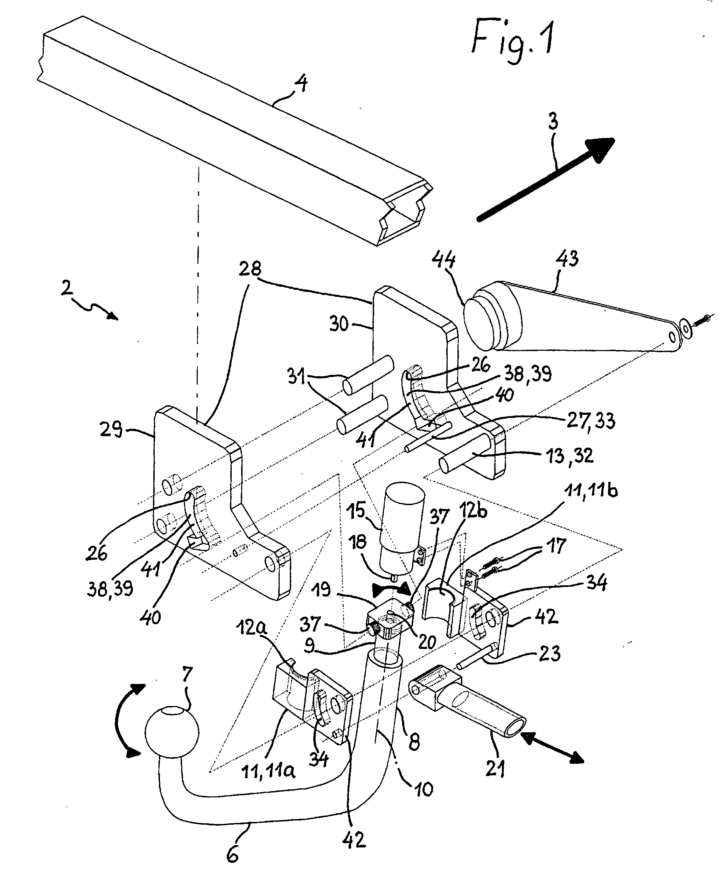

Die Motoranordnung wird von zwei jeweils einem der beiden Freiheitsgrade zugeordneten Motoren gebildet, so dass ein dem Drehachsglied 8 zu seinem Verdrehen zugeordneter Drehmotor 15 und ein der Drehlagereinrichtung 11 zu ihrem Verschwenken zugeordneter Schwenkmotor 16 (in den Figuren 1, 4, 6, 8 und 10 nicht eingezeichnet) vorhanden sind.

Der Drehmotor 15 ist fest mit der Drehlagereinrichtung 11 verbunden, so dass er deren Schwenkbewegung um die Schwenkachse 13 mitmacht. Die Befestigung des Drehmotors 15 an der Drehlagereinrichtung 11 geht aus der Explosionsdarstellung gemäß Figur 1 hervor (Befestigungsschrauben 17). Dabei ist der Drehmotor 15 so angeordnet, dass er mit seiner Antriebswelle 18 koaxial zum Drehachsglied 8 ausgerichtet und treibend mit diesem verbunden ist. Hierzu ist an einem an den Lagerabschnitt 9 anschließenden Kopfteil 19 des Drehachsgliedes 8 eine Mitnahmeeinrichtung beispielsweise in Gestalt einer axialen Ausnehmung 20 vorhanden, in die die Antriebswelle 18 eingesteckt wird, wobei die Ausnehmung 20 und die Antriebswelle 18 einen von einer Kreisform abweichenden Querschnitt aufweisen.

Der Schwenkmotor 16 bildet zusammen mit einer von ihm getriebenen Schubstange 21 eine Antriebseinheit 22, die einerseits an der Drehlagereinrichtung 11 angreift und andererseits von einem fahrzeugfesten Teil 24 gehalten wird. Dabei ist die Antriebseinheit 22 sowohl an der Drehlagereinrichtung 11 als auch an dem Teil 24 gelenkig angeordnet. Hierzu sitzt die Schubstange 21 mit ihrem dem Schwenkmotor 16 entgegengesetzten Ende exzentrisch zur Schwenkachse 13 an einer an der Drehlagereinrichtung 11 angeordneten Anlenkachse 23. Das Teil 24 wird von einem am Innenumfang konkav kugeligen Lagerring 47 gebildet, in dem ein entsprechend kugeliges, mit dem Gehäuse des Schwenkmotors 16 verbundenes Lagerstück 48 schwenkbar gelagert ist, so dass sich eine kugelgelenkartige Anordnung ergibt. Die Antriebseinheit 22 könnte jedoch auch in umgekehrter Lage verwendet werden, so dass nicht die Schubstange 21 sondern das Motorgehäuse an der Drehlagereinrichtung 11 angelenkt wäre.

Der Schwenkmotor 16 treibt eine Gewindespindel 25, die mit der Schubstange 21 in Gewindeeingriff steht. Bei eingeschaltetem Schwenkmotor 16, wenn sich die Gewindespindel 25 in die eine oder andere Richtung dreht, verlagert sich die Schubstange 21 an der Gewindespindel 25 in deren Längsrichtung. Dabei wird über die Anlenkachse 23 die Drehlagereinrichtung 11 mitgenommen, die dabei um die Schwenkachse 13 schwenkt.

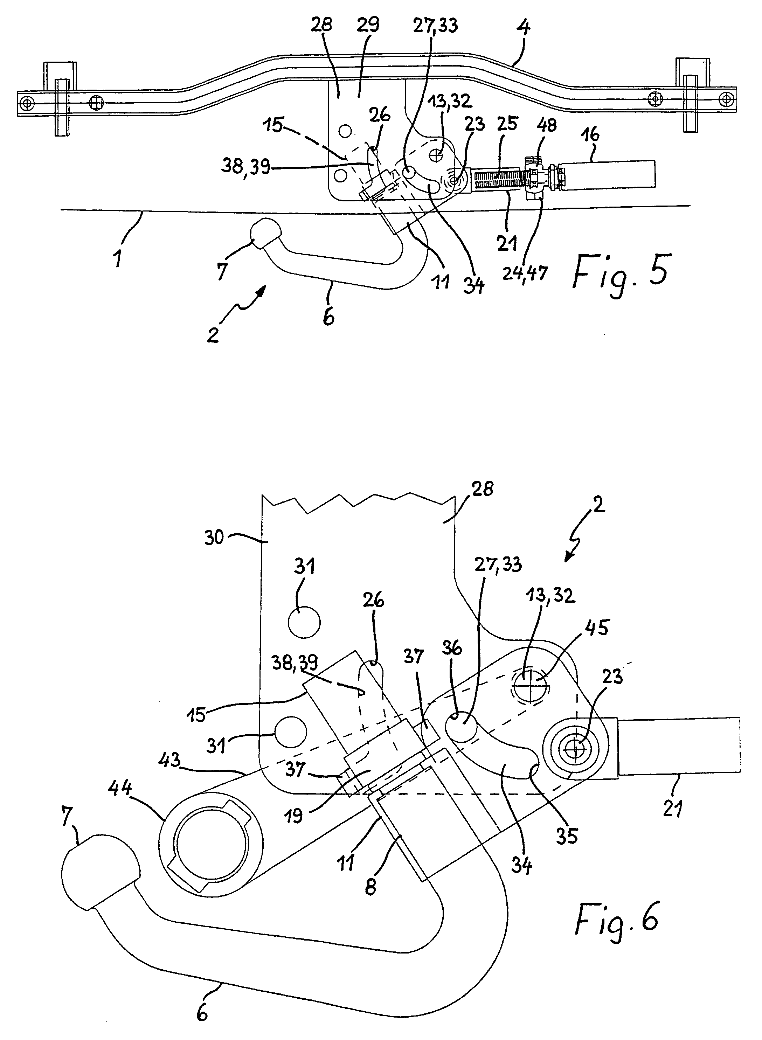

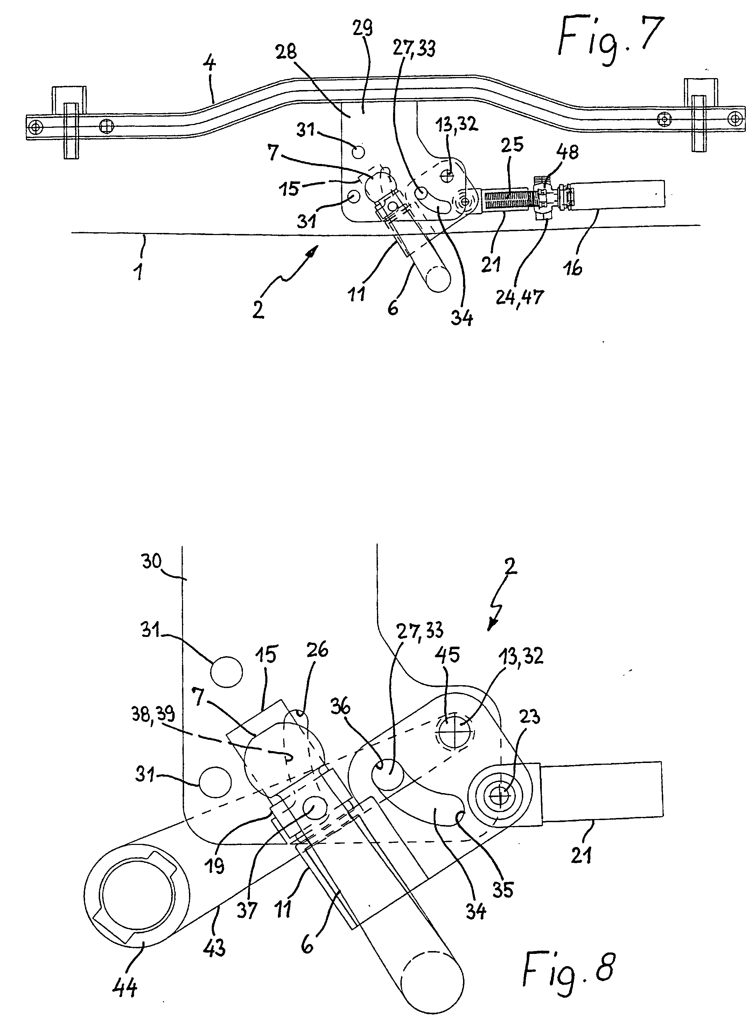

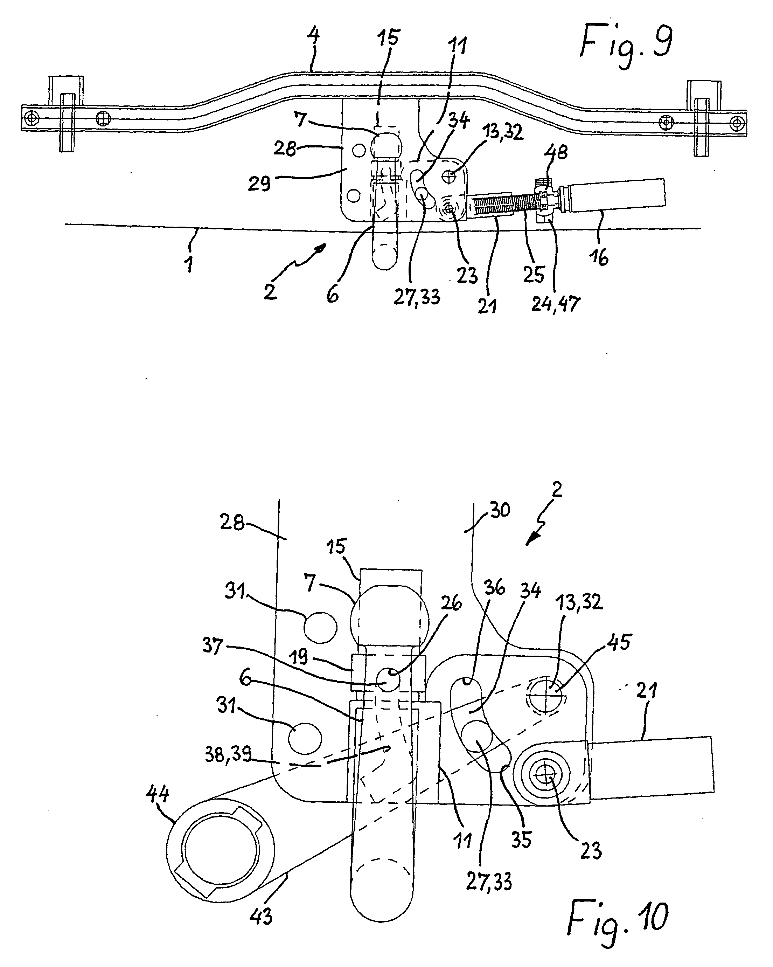

In der Nichtgebrauchsstellung des Kupplungsarms 6 ist die Drehlagereinrichtung 11 und mit dieser der Kupplungsarm 6 nach oben geschwenkt (Figuren 3 und 4). Dabei ist der Kupplungsarm 6 zur Seite gedreht, so dass er vor der Heckschürze 1 angeordnet ist. Beim Überführen des Kupplungsarms 6 in die Gebrauchsstellung wird die Drehlagereinrichtung 11 aus ihrer in der Nichtgebrauchsstellung eingenommenen Schwenk-Endlage zunächst nach unten in eine untere Schwenklage verschwenkt, wobei das Drehachsglied 8 und somit der Kupplungsarm 6 seine in der Nichtgebrauchsstellung eingenommene Drehlage beibehält (Figuren 5 und 6). In dieser unteren Schwenklage befindet sich der Kupplungsarm 6 mit dem Kopfstück 7 unterhalb der Heckschürze 1. Sodann wird unter Beibehaltung der unteren Schwenklage der Drehlagereinrichtung 11 das Drehachsglied 8 so verdreht, dass der Kupplungsarm 6 hinter die Heckschürze 1 gelangt. Da das Drehachsglied 8 hierbei der unteren Schwenklage der Drehlagereinrichtung 11 entsprechend geneigt zur Vertikalen verläuft, gelangt der Kupplungsarm 6 mit dem Kopfstück 7 gleichzeitig etwas nach oben (Figuren 7, 8). In einem letzten Verfahrensschritt wird dann bei seine Drehlage beibehaltendem Drehachsglied 8 die Drehlagereinrichtung 11 wieder verschwenkt, und zwar zur gleichen Seite hin, von wo sie vorher aus der Nichtgebrauchsstellung nach unten geschwenkt worden ist. In diesem letzten Verfahrensschritt wird die Drehlagereinrichtung 11 also sozusagen wieder zurückgeschwenkt, bis sie in die aus den Figuren 9 und 10 hervorgehende, der Gebrauchsstellung des Kupplungsarms 6 entsprechende Schwenk-Endlage gelangt. Dabei kommt das Kopfstück 7 noch etwas weiter nach oben.

Beim Überführen des Kupplungsarms 6 aus der Gebrauchsstellung in die Nichtgebrauchsstellung laufen die gleichen Bewegungen in umgekehrter Richtung ab.

Der Gebrauchsstellung und der Nichtgebrauchsstellung des Kupplungsarms 6 ist jeweils ein Endanschlag 26 bzw. 27 zugeordnet. Die beiden Endanschläge 26, 27 sind fahrzeugfest angeordnet und befinden sich beim Ausführungsbeispiel ebenso wie die Schwenkachse 13 an einer fahrzeugfest zu montierenden Schwenklagereinrichtung 28. Sowohl in der Gebrauchsstellung als auch in der Nichtgebrauchsstellung wird, wie im Einzelnen noch erläutert werden wird, ein an der Drehlagereinrichtung 11 angeordnetes oder schenkfest mit dieser verbundenes Teil gegen den betreffenden Endanschlag 26 bzw. 27 gehalten. Dies erfolgt durch die Antriebseinheit 22 mit dem Schwenkmotor 16.

Es versteht sich, dass die Steuereinheit 14 die beiden Motoren 15, 16 so steuert, dass die geschilderte Aufeinanderfolge von Dreh- und Schwenkbewegungen abläuft.

Die Steuereinheit 14 überwacht ferner die Motorströme und enthält eine Abschalteinrichtung zum Abschalten der Stromversorgung beim Eintreffen des Kupplungsarms 6 in der Gebrauchsstellung und in der Nichtgebrauchsstellung in Abhängigkeit von dem dabei durch das Anschlagen an dem jeweiligen Endanschlag 26 bzw. 27 auftretenden Anstieg der Stromstärke. Beim Eintreffen in der Gebrauchsstellung oder in der Nichtgebrauchsstellung nimmt die Stromstärke im Schwenkmotor 16 in Folge des Anschlagens an den Endanschlag 26 bzw. 27 stark zu, so dass die Stromversorgung ausgeschaltet wird.

In diesem Zusammenhang ist ferner vorgesehen, dass die Steuereinheit 14 eine Nachstelleinrichtung enthält, die, befindet sich der Kupplungsarm 6 in der Gebrauchsstellung bzw. in der Nichtgebrauchsstellung, in zeitlichen Intervallen die Stromversorgung des Schwenkmotors 16 in Gang setzt. Auf diese Weise wird ein durch Vibrationen und Stöße während des Fahr- und Schleppbetriebes möglicherweise auftretendes Spiel an den Endanschlägen beseitigt, da das an dem jeweiligen Endanschlag anliegende Teil immer wieder gegen den Endanschlag gefahren wird.

Die Schwenklagereinrichtung 28 enthält zwei mit Abstand zueinander angeordnete Halteplatten 29, 30, die durch beim Ausführungsbeispiel bolzenartige Distanzhalter 31 im Abstand zueinander gehalten werden. Zur fahrzeugfesten Fixierung der Schwenklagereinrichtung 28 ist beim Ausführungsbeispiel die hintere Halteplatte 29 fest mit dem Querträger 4 verbunden. Die Drehlagereinrichtung 11 ist zwischen den beiden Halteplatten 29, 30 angeordnet, so dass sie bei ihrem Verschwenken an den Halteplatten vorbeischwenkt. In der Nichtgebrauchsstellung greift der Kupplungsarm 6 zwischen die beiden Halteplatten 29, 30, so dass er durch die Halteplatten 29, 30 gegen ein ungewolltes Verschwenken um die Drehachslinie 10 gesichert ist.

Die beiden Halteplatten 29, 30 sind ferner durch einen die Schwenkachse 13 bildenden Schwenklagerbolzen 32 miteinander verbunden. Des weiteren ist ein von den Halteplatten 29, 30 abstehendes und dabei in den Schwenkweg der Drehlagereinrichtung 11 vorstehendes Anschlagglied 33 vorhanden, das im dargestellten Falle von einem Anschlagbolzen gebildet wird, der parallel zum Schwenklagerbolzen 32 und den Distanzhaltern 31 zwischen den beiden Halteplatten 29, 30 verläuft und diese ebenfalls miteinander verbindet. Dieses Anschlagglied 33 bildet den der Nichtgebrauchsstellung zugeordneten Endanschlag 27.

Die Drehlagereinrichtung 11 enthält eine kreisbogenförmig um die Schwenkachse 13 verlaufende Langlochanordnung 34, die von dem Anschlagglied 33 durchgriffen wird. Das eine Langlochende 35 dieser Langlochanordnung 34 schlägt in der Nichtgebrauchsstellung an dem den Endanschlag 27 bildenden Anschlagglied 33 an.

Das Anschlagglied 33 bestimmt ferner die untere Schwenklage der Drehlagereinrichtung 11 (Figuren 5 bis 8). In der unteren Schwenklage schlägt das entgegengesetzte Langlochende 36 der Langlochanordnung 34 an dem Anschlagglied 33 an.

Prinzipiell könnte auch nur eine der beiden Halteplatten 29, 30 vorhanden sein, die neben der Drehlagereinrichtung angeordnet ist, so dass die Drehlagereinrichtung an ihr vorbeischwenkt. Die Schwenkachse und die beiden Endanschläge wären dann an dieser nur einen Halteplatte angeordnet.

Die Halteplatten 29, 30 stehen quer zur Fahrzeug-Längsrichtung 3.

Wie aus einem Vergleich der Figuren 3 und 4 einerseits und den Figuren 9 und 10 andererseits hervorgeht, ist die Drehlagereinrichtung 11 mit Bezug auf ihre untere Schwenklage gemäß den Figuren 5 bis 8 in der Nichtgebrauchsstellung um einen größeren Schwenkwinkel als in der Gebrauchsstellung nach oben geschwenkt. Um dies zu ermöglichen, ist mit dem Drehachsglied 8 ein außerhalb der Drehlagereinrichtung 11 angeordnetes Anschlagelement 37 drehfest verbunden, das vom Drehachsglied 8 seitlich absteht und in der der Nichtgebrauchsstellung entsprechenden Drehlage des Drehachsglieds 8 beim Verschwenken der Drehlagereinrichtung 11 eine abseits des Endanschlags 26, der der Gebrauchslage zugeordnet ist, verlaufende Bewegungsbahn durchläuft und in der der Gebrauchsstellung entsprechenden Drehlage des Drehachsglieds 8 beim Verschwenken der Drehlagereinrichtung 11 eine den der Gebrauchslage zugeordneten Endanschlag 26 enthaltende Bewegungsbahn durchläuft. Auf diese Weise ist das Anschlagelement 37 in der Drehlage der Nichtgebrauchsstellung aus der Ebene des Endanschlags 26 weggedreht und somit unwirksam und in der Drehlage der Gebrauchsstellung in die Ebene des Endanschlags 26 gedreht und somit wirksam.

Beim Ausführungsbeispiel sind zwei solche Anschlagelemente 37 vorhanden, die nach entgegengesetzten Richtungen hin vom Drehachsglied 8 bzw. von einem drehfest mit diesem verbundenen Teil abstehen, wobei jedem dieser Anschlagelemente 37 ein Endanschlag 26 zugeordnet ist.

Beim Ausführungsbeispiel befindet sich das mindestens eine Anschlagelement 37 in Gestalt eines seitlichen Anschlagvorsprungs an dem Kopfteil 19 des Drehachsgliedes 8, das an den Lagerabschnitt 9 anschließt, außerhalb der Drehlagereinrichtung 11 angeordnet ist und vom Drehmotor 15 angetrieben wird.

Die Schwenklagereinrichtung 28 enthält eine Anschlagausnehmung 38, wobei im dargestellten Falle jede Halteplatte 29, 30 eine solche Anschlagausnehmung 38 aufweist. Diese Anschlagausnehmung 38 wird von dem der Gebrauchslage zugeordneten Endanschlag 26 begrenzt. In der der Nichtgebrauchsstellung entsprechenden Drehlage des Drehachsgliedes 8 befinden sich die Anschlagelemente 37 außerhalb der Anschlagausnehmungen 38.

Verdreht man das Drehachsglied 8 in der unteren Schwenklage der Drehlagereinrichtung 11 in die der Gebrauchsstellung entsprechende Drehlage, taucht das jeweilige Anschlagelement 37 in die zugewandte Anschlagausnehmung 38 ein, so dass beim anschließenden Hochschwenken das jeweilige Anschlagelement 37 zum Endanschlag 26 gelangt.

Umgekehrt gelangen die Anschlagelemente 37 beim Überführen des Kupplungsarms 6 aus der Gebrauchsstellung in die Nichtgebrauchsstellung aus den Anschlagausnehmungen 38, wenn man das Drehachsglied 8 in der unteren Schwenklage der Drehlagereinrichtung 11 entsprechend verdreht, so dass die Drehlagereinrichtung 11 anschließend in die Nichtgebrauchsstellung hochgeschwenkt werden kann.

Die Anschlagausnehmungen 38 werden beim Ausführungsbeispiel von einer Schlitzanordnung 39 mit einer Eintauchpartie 40, an der das Eintreten bzw. Austreten des jeweiligen Anschlagelements 37 beim Verdrehen des Drehachsgliedes 8 erfolgt, und einer an die Eintauchpartie 40 anschließenden, kreisförmig um die Schwenkachse 13 verlaufenden Bogenpartie 41 gebildet. Das Ende der Bogenpartie 41 bildet den Endanschlag 26. Befinden sich die Anschlagelemente 37 in den Bogenpartien 41, ist das Drehachsglied 8 durch die Ränder der Bogenpartie 41 gegen ein ungewolltes Verdrehen um die Drehachslinie 10 gesichert.

Bezüglich der Drehlagereinrichtung 11 ist noch nachzutragen, dass die beiden Lagerteile 11a, 11b neben der Lagerschale 12a, 12b eine Lagerplatte 42 aufweisen, die an der Schwenkachse 13 gelagert ist und an der die kreisbogenförmige Langlochanordnung 34 angeordnet ist, wobei sich genauer gesagt an jeder Lagerplatte 42 ein solches Langloch befindet. Die die Schubstange 21 gelenkig lagernde Anlenkachse 23 verläuft zwischen den Lagerplatten 42, so dass das Schubstangenende zwischen die beiden Lagerplatten 42 greift.

Die Anhängerkupplung enthält ferner einen Trägerarm 43, an dem eine elektrische Anschlusseinrichtung 44, insbesondere in Gestalt einer Steckdose, für ein zum Anhänger führendes Stromkabel angeordnet ist. Der Trägerarm 43 ist an einer ortsfesten Drehachse 45 angelenkt, die beim Ausführungsbeispiel an der Schwenklagereinrichtung 28 angeordnet ist. Dabei kann die Drehachse 45 koaxial zur Schwenkachse 13 angeordnet sein oder von dieser gebildet werden, beispielsweise indem die Schwenkachse 13 über die Halteplatte 30 hinaus verlängert und der Trägerarm 43 an dieser Schwenkachsverlängerung gelagert ist. In der Nichtgebrauchsstellung des Kupplungsarms 6 wird der Trägerarm 43 durch den Kupplungsarm 6 nach unten hin abgestützt und somit in der Höhe gehalten (Figur 4). Schwenkt man die Drehlagereinrichtung 11 und somit den Kupplungsarm 6 nach unten, macht der Trägerarm 43 diese Schwenkbewegung mit, wobei er jedoch vor dem Erreichen der unteren Schwenklage anderweitig, beispielsweise innen auf dem Stoßfänger 1 oder an einem Auflageteil an einer der Halteplatten 29, 30, zur Auflage gelangt und somit vom Kupplungsarm 6 freikommt, der dann anschließend ohne Beeinflussung des Trägerarms 43 nach hinten hin ausgeschwenkt und anschließend nach oben in die Gebrauchsstellung bewegt wird. Dabei bleibt der Trägerarm 43 mit der elektrischen Anaschlusseinrichtung 44 in der aus den Figuren 4, 6, 8 und 10 hervorgehenden Lage, in der die Anschlusseinrichtung 44 zugänglich ist. Bewegt man den Kupplungsarm 6 wieder in die Nichtgebrauchsstellung, nimmt er beim Hochschwenken aus der unteren Schwenklage den Trägerarm 43 mit, so dass die Anschlusseinrichtung 44 wieder hinter dem Stoßfänger 1 verborgen ist.

Das Absenken des Trägerarmes 43 kann durch eine nicht dargestellte Zug- oder Druckfeder unterstützt werden.

Aus Figur 2 ist ersichtlich, dass der Kupplungsarm 6 nicht um die Unterkante der Heckschürze 1 herum verlaufen muss sondern auch eine im unteren, nach vorne gerichteten Bereich der Heckschürze 1 angeordnete Durchtrittsausnehmung 46 durchsetzen kann, die in Querrichtung (senkrecht zur Zeichenebene) längliche Gestalt aufweist, so dass der Kupplungsarm in der Drehstellung der Nichtgebrauchslage beim Verschwenken der Drehlagereinrichtung 11 hindurch schwenken kann.

## Patentansprüche

1. Anhängerkupplung für Kraftfahrzeuge, insbesondere Personenkraftwagen, mit einem Kupplungsarm, der an seinem freien Ende ein hochstehend angeordnetes Kopfstück zum lösbaren Befestigen eines Anhängers trägt und mittels einer Motoranordnung zwischen einer im am Fahrzeug montierten Zustand nach hinten gerichteten Gebrauchsstellung und einer weiter vorne angeordneten Nichtgebrauchsstellung verstellbar ist, wobei der Kupplungsarm mit einem Drehachsglied fest verbunden ist, das in einer Drehlagereinrichtung verdrehbar gelagert ist, so dass beim Verdrehen des Drehachsglieds der Kupplungsarm um die Achslinie des Drehachsglieds schwenkt und das Kopfstück dabei seine Lage in Fahrzeug-Längsrichtung verändert, wobei die Drehlagereinrichtung um eine im Wesentlichen in Fahrzeug-Längsrichtung gerichtete Schwenkachse schwenkbar ist, so dass der Kupplungsarm beim Verschwenken der Drehlagereinrichtung eine Hoch-Tief-Bewegung ausführt, und wobei der Gebrauchsstellung und der Nichtgebrauchsstellung des Kupplungsarms jeweils ein Endanschlag zugeordnet ist, **dadurch gekennzeichnet, dass** die Drehlagereinrichtung (11) in der Gebrauchsstellung und in der Nichtgebrauchsstellung jeweils eine mit Bezug auf eine während des Verdrehens des Drehachsgliedes (8) eingenommene untere Schwenklage nach oben geschwenkte Schwenk-Endlage einnimmt, wobei die beiden Schwenk-Endlagen, ausgehend von der unteren Schwenklage, zur gleichen Seite hin verschwenkt sind.

2. Anhängerkupplung nach Anspruch 1, **dadurch gekennzeichnet, dass** die Drehlagereinrichtung (11) in der Nichtgebrauchsstellung um einen größeren Schwenkwinkel als in der Gebrauchsstellung nach oben geschwenkt ist.

3. Anhängerkupplung nach Anspruch 2, **dadurch gekennzeichnet, dass** mit dem Drehachsglied (8) ein außerhalb der Drehlagereinrichtung (11) angeordnetes Anschlagelement (37) drehfest verbunden ist, das in der der Nichtgebrauchsstellung entsprechenden Drehlage des Drehachsglieds (8) beim Verschwenken der Drehlagereinrichtung (11) eine abseits des der Gebrauchslage zugeordneten Endanschlags (26) verlaufende Bewegungsbahn und in der der Gebrauchsstellung entsprechenden Drehlage des Drehachsglieds (8) beim Verschwenken der Drehlagereinrichtung (11) eine den der Gebrauchslage zugeordneten Endanschlag (26) enthaltende Bewegungsbahn durchläuft.

4. Anhängerkupplung nach einem der Ansprüche 1 bis 3, **dadurch gekennzeichnet, dass** die Schwenkachse (13) und die beiden Endanschläge (26, 27) an einer fahrzeugfest zu montierenden Schwenklagereinrichtung (28) angeordnet sind.

5. Anhängerkupplung nach Anspruch 4, **dadurch gekennzeichnet, dass** die Schwenklagereinrichtung (28) mindestens eine neben der Drehlagereinrichtung (11) angeordnete Halteplatte (29, 30) enthält, an der die Drehlagereinrichtung (11) vorbeischwenkt, wobei die Schwenkachse (13) und die Endanschläge (26, 27) an der mindestens einen Halteplatte (29, 30) angeordnet sind.

6. Anhängerkupplung nach Anspruch 5, **dadurch gekennzeichnet, dass** die Schwenklagereinrichtung (28) zwei mit Abstand zueinander angeordnete Halteplatten (29, 30) enthält, zwischen denen die Drehlagereinrichtung (11) angeordnet ist.

7. Anhängerkupplung nach Anspruch 6, **dadurch gekennzeichnet, dass** die beiden Halteplatten (29, 30) durch einen die Schwenkachse (13) bildenden Schwenklagerbolzen (32) miteinander verbunden sind.

8. Anhängerkupplung nach einem der Ansprüche 5 bis 7, **dadurch gekennzeichnet, dass** von der mindestens einen Halteplatte (29, 30) ein den der Nichtgebrauchsstellung zugeordneten Endanschlag (27) bildendes Anschlagglied (33) in den Schwenkweg der Drehlagereinrichtung (11) vorsteht, das im Falle von zwei Halteplatten (29, 30) von einem die beiden Halteplatten verbindenden Anschlagbolzen gebildet wird.

9. Anhängerkupplung nach Anspruch 8, **dadurch gekennzeichnet, dass** die Drehlagereinrichtung (11) eine von dem Anschlagglied (33) durchgriffene, kreisbogenförmig um die Schwenkachse (13) verlaufende Langlochanordnung (34) aufweist, deren eines Langlochende (35) in der Nichtgebrauchsstellung des Kupplungsarms (6) an dem Anschlagglied (33) anschlägt.

10. Anhängerkupplung nach Anspruch 9, **dadurch gekennzeichnet, dass** in der unteren Schwenklage der Drehlagereinrichtung (11) das andere Langlochende (36) am Anschlagglied (33) anschlägt.

11. Anhängerkupplung nach einem der Ansprüche 4 bis 10, **dadurch gekennzeichnet, dass** die Schwenklagereinrichtung (28) eine Anschlagausnehmung (38) enthält, in die das Anschlagelement (37) beim Verdrehen des Drehachsgliedes (8) in die der Gebrauchsstellung entsprechende Drehlage, wenn die Drehlagereinrichtung (11) ihre untere Schwenklage einnimmt, eintaucht, wobei die Anschlagausnehmung (38) in Schwenkrichtung von dem der Gebrauchslage zugeordneten Endanschlag (26) begrenzt wird.

12. Anhängerkupplung nach Anspruch 11, **dadurch gekennzeichnet, dass** die Anschlagausnehmung (38) an der mindestens einen Halteplatte (29, 30) angeordnet ist.

13. Anhängerkupplung nach Anspruch 11 oder 12, **dadurch gekennzeichnet, dass** die Anschlagausnehmung (38) von einer Schlitzanordnung (39) mit einer Eintauchpartie (40) und einer an diese anschließenden, kreisbogenförmig um die Schwenkachse (13) verlaufenden Bogenpartie (41) gebildet wird, deren Ende den Endanschlag (26) bildet.

14. Anhängerkupplung nach einem der Ansprüche 3 bis 13, **dadurch gekennzeichnet, dass** am Drehachsglied (8) ein außerhalb der Drehlagereinrichtung (11) angeordnetes Kopfteil (19) angeordnet ist, das das mindestens eine Anschlagelement (37) in Gestalt eines seitlichen Anschlagvorsprungs trägt.

15. Anhängerkupplung nach einem der Ansprüche 1 bis 14, **dadurch gekennzeichnet, dass** die Drehlagereinrichtung (11) zweiteilig ausgebildet ist und von zwei von entgegengesetzten Seiten her an das Drehachsglied (8) angesetzten Lagerteilen (11a, 11b) mit einer Lagerschale (12a, 12b) für das Drehachsglied (8) gebildet wird.

16. Anhängerkupplung nach Anspruch 15, **dadurch gekennzeichnet, dass** die beiden Lagerteile (11a, 11b) neben der Lagerschale (12a, 12b) eine Lagerplatte (42) aufweisen, die an der Schwenkachse (13) gelagert und an der die kreisbogenförmige Langlochanordnung (34) angeordnet ist.

17. Anhängerkupplung nach einem der Ansprüche 1 bis 16, **dadurch gekennzeichnet, dass** die Motoranordnung einen dem Drehachsglied (8) zu seinem Verdrehen zugeordneten, an der Drehlagereinrichtung (11) angeordneten Drehmotor (15) enthält.

18. Anhängerkupplung nach Anspruch 17, **dadurch gekennzeichnet, dass** der Drehmotor (15) mit seiner Antriebswelle (18) koaxial zum Drehachsglied (8) angeordnet und treibend mit diesem verbunden ist.

19. Anhängerkupplung nach einem der Ansprüche 1 bis 18, **dadurch gekennzeichnet, dass** die Motoranordnung einen der Drehlagereinrichtung (11) zu ihrem Verschwenken zugeordneten Schwenkmotor (16) enthält.

20. Anhängerkupplung nach Anspruch 19, **dadurch gekennzeichnet, dass** die von dem Schwenkmotor (16) und einer von diesem getriebenen Schubstange (21) gebildete Antriebseinheit (22) gelenkig einerseits exzentrisch zur Schwenkachse (13) an der Drehlagereinrichtung (11) angreift und andererseits von einem fahrzeugfesten Teil gehalten wird.

21. Anhängerkupplung nach Anspruch 19 oder 20, **dadurch gekennzeichnet, dass** eine die Stromversorgung der elektrischen Motoranordnung steuernde Steuereinheit (14) mit einer Abschalteinrichtung zum Abschalten der Stromversorgung beim Eintreffen des Kupplungsarms (6) in der Gebrauchsstellung und in der Nichtgebrauchsstellung in Abhängigkeit von dem dabei durch das Anschlagen an dem jeweiligen Endanschlag (26 bzw. 27) auftretenden Anstieg der Stromstärke vorhanden ist.

22. Anhängerkupplung nach Anspruch 21, **dadurch gekennzeichnet, dass** die Steuereinheit (14) eine Nachstelleinrichtung enthält, die, befindet sich der Kupplungsarm (6) in der Gebrauchsstellung bzw. in der Nichtgebrauchsstellung, in zeitlichen Intervallen die Stromversorgung in Gang setzt.

23. Anhängerkupplung nach einem der Ansprüche 1 bis 22, **dadurch gekennzeichnet, dass** sie einen eine elektrische Anschlusseinrichtung (44) für ein zum Anhänger führendes Stromkabel tragenden Trägerarm (43) aufweist, der an einer ortsfesten Drehachse (45), insbesondere an der Schwenklagereinrichtung (28), angelenkt ist, wobei der Trägerarm (43) in der Nichtgebrauchsstellung des Kupplungsarms (6) durch diesen nach unten hin abgestützt ist und beim Überführen des Kupplungsarms (6) in die Gebrauchsstellung vom Kupplungsarm (6) freikommt und anderweitig aufliegt, so dass die Anschlusseinrichtung (44) von außen her zugänglich ist.

## Claims

1. Trailer coupling for motor vehicles, in particular cars, with a coupling arm carrying at its free end an upright head section for the releasable fastening of a trailer and adjustable by means of a motor assembly between a position of use mounted on the vehicle and facing towards the rear, and an inoperative position in which it is positioned further forward, wherein the coupling arm is firmly connected to a hinge pin element mounted rotatably in a rotary bearing device so that, on rotation of the hinge pin element, the coupling arm swivels around the axis line of the hinge pin element and the head section at the same time changes its position in the vehicle longitudinal direction, wherein the rotary bearing device may be pivoted around a swivel axis substantially aligned in the vehicle longitudinal direction so that during swivelling of the rotary bearing device the coupling arm executes an up-down movement, and wherein the position of use and the inoperative position of the coupling arm are each assigned a limit stop, **characterised in that** the rotary bearing device (11) in both the position of use and in the inoperative position assumes a swivel end position swivelled upwards relative to a lower swivel position adopted during rotation of the hinge pin element (8), wherein the two swivel end positions, starting from the lower swivel position, are swivelled towards the same side.

2. Trailer coupling according to claim 1 **characterised in that**, in the inoperative position, the rotary bearing device (11) is swivelled upwards by a greater angle of swivel than in the position of use.

3. Trailer coupling according to claim 2, **characterised in that** there is non-rotatably connected to the hinge pin element (8) a stop element (37) fitted outside the rotary bearing device (11) and which, in the rotation position of the hinge pin element (8) corresponding to the inoperative position, during swivelling of the rotary bearing device (11), passes through a movement path running to one side of the limit stop (26) assigned to the position of use, and in the rotation position of the hinge pin element (8) corresponding to the position of use, during swivelling of the rotary bearing device (11), passes through a movement path containing the limit stop (26) assigned to the position of use.

4. Trailer coupling according to any of claims 1 to 3, **characterised in that** the swivel axis (13) and the two limit stops (26, 27) are mounted on a swivel bearing device (28) to be fitted rigidly to the vehicle.

5. Trailer coupling according to claim 4, **characterised in that** the swivel bearing device (28) contains one or more retaining plates (29, 30) arranged adjacent to the rotary bearing device (11) and on which the rotary bearing device (11) swivels past, while the swivel axis (13) and the limit stops (26, 27) are arranged on one or more of the retaining plates (29, 30).

6. Trailer coupling according to claim 5, **characterised in that** the swivel bearing device (28) contains two retaining plates (29, 30) spaced apart from one another, between which the rotary bearing device (11) is mounted.

7. Trailer coupling according to claim 6, **characterised in that** the two retaining plates (29, 30) are joined to one another by a swivel bearing pin (32) forming the swivel axis (13).

8. Trailer coupling according to any of claims 5 to 7 **characterised in that**, from the retaining plate or plates (29, 30), a stop element (33) forming the limit stop (27) assigned to the inoperative position projects into the swivel path of the rotary bearing device (11), and in the case of two retaining plates (29, 30) is formed by a stop pin connecting the two retaining plates.

9. Trailer coupling according to claim 8, **characterised in that** the rotary bearing device (11) has an elongated hole arrangement (34) through which passes the stop element (33) and which runs in a circular arc around the swivel axis (13), while one elongated hole end (35) strikes against the stop element (33) in the inoperative position of the coupling arm (6).

10. Trailer coupling according to claim 9 **characterised in that**, in the lower swivel position of the rotary bearing device (11), the other elongated hole end (36) strikes against the stop element (33).

11. Trailer coupling according to any of claims 4 to 10, **characterised in that** the swivel bearing device (28) contains a stop recess (38) into which the stop element (37) dips during rotation of the hinge pin element (8) into the rotation position corresponding to the position of use, when the rotary bearing device (11) assumes its lower swivel position, while the stop recess (38) is bounded in the direction of swivelling by the limit stop (26) assigned to the position of use.

12. Trailer coupling according to claim 11, **characterised in that** the stop recess (38) is located on the retaining plate or plates (29, 30).

13. Trailer coupling according to claim 1 or 12, **characterised in that** the stop recess (38) is formed by a slot arrangement (39) with a dipping section (40) and an adjacent curved section (41) running in a circular arc around the swivel axis (13) and forming with its end the limit stop (26).

14. Trailer coupling according to any of claims 3 to 13, **characterised in that** the hinge pin element (8) is provided with a head section (19) located outside the rotary bearing device (11) and carrying the stop element or elements (37) in the form of a side stop projection or projections.

15. Trailer coupling according to any of claims 1 to 14, **characterised in that** the rotary bearing device (11) is made in two parts and is formed by two bearing parts (11a, 11b) attached from opposite sides to the hinge pin element (8), with a bearing bushing (12a, 12b) for the hinge pin element (8).

16. Trailer coupling according to claim 15 **characterised in that**, besides the bearing bushing (12a, 12b), the two bearing parts (11a, 11b) have a bearing plate (42) which is mounted on the swivel axis (13) and located at the circular-arc-shaped elongated hole arrangement (34).

17. Trailer coupling according to any of claims 1 to 16, **characterised in that** the motor assembly contains a rotary motor (15) assigned to the hinge pin element (8) for its rotation and mounted on the rotary bearing device (11).

18. Trailer coupling according to claim 17, **characterised in that** the rotary motor (15) is arranged with its drive shaft (18) coaxial to the hinge pin element (8) with which it makes a driving connection.

19. Trailer coupling according to any of claims 1 to 18, **characterised in that** the motor assembly contains a swivel motor (16) assigned to the rotary bearing device (11) for its swivelling.

20. Trailer coupling according to claim 19 **characterised in that** the drive unit (22), formed by the swivel motor (16) and a push rod (21) driven by the former, acts on the rotary bearing device (11) pivoted on one side eccentrically to the swivel axis (13), and on the other side is held by a part fixed to the vehicle.

21. Trailer coupling according to claim 19 or 20, **characterised in that** there is provided a control unit (14) controlling the power supply to the electrical motor assembly, with a disconnection device for switching off the power supply when the coupling arm (6) reaches the position of use and, in the inoperative position, depending on the rise in current strength occurring due to striking against the respective limit stop (26 or 27).

22. Trailer coupling according to claim 21, **characterised in that** the control unit (14) contains a readjusting device which, if the coupling arm (6) is in the position of use or in the inoperative position, switches on the power supply at timed intervals.

23. Trailer coupling according to any of claims 1 to 22, **characterised in that** it has a bearing arm (43) carrying an electrical connection device (44) for a power cable leading to the trailer, which is pivoted at a stationary rotation axis (45), in particular on the swivel bearing device (28), wherein the bearing arm (43) is supported from below by the coupling arm (6) in the inoperative position of the latter, and is released and lies in a different position when the coupling arm (6) moves into its position of use, so that the connection device (44) is accessible from outside.

## Revendications

1. Attelage de remorque pour véhicules automobiles, en particulier pour voitures de tourisme, comportant un bras d'attelage qui porte, à son extrémité libre, une pièce de tête disposée verticalement pour la fixation séparable d'une remorque, et qui est déplaçable, au moyen d'un dispositif à moteur, entre une position dite d'utilisation dirigée vers l'arrière à l'état monté sur le véhicule, et une position de non-utilisation prévue plus loin vers l'avant, le bras d'attelage étant solidaire d'un organe formant axe de rotation qui est monté de manière à pouvoir tourner dans un dispositif à palier de rotation, de sorte que lors de la rotation de l'organe formant axe de rotation, le bras d'attelage pivote autour de la ligne axiale de l'organe formant axe de rotation, et la pièce de tête change ici de position dans la direction longitudinale du véhicule, le dispositif à palier de rotation pouvant pivoter autour d'un axe de pivotement dirigé sensiblement dans la direction longitudinale du véhicule, de sorte que lors du pivotement du dispositif à palier de rotation, le bras d'attelage exécute un mouvement de haut en bas, et étant associée une butée terminale à la position d'utilisation comme à la position de non-utilisation du bras d'attelage, **caractérisé en ce que** le dispositif à palier de rotation (11) en position d'utilisation comme en position de non-utilisation prend une position de fin de pivotement pivotée vers le haut par rapport à une position de pivotement basse prise pendant la rotation de l'organe à axe de rotation (8), les deux positions terminales de pivotement, partant de la position de pivotement basse, étant pivotées vers le même côté.

2. Attelage de remorque selon la revendication 1, **caractérisé en ce qu'**en position de non-utilisation, le dispositif à palier de rotation (11) est pivoté vers le haut d'un angle de pivotement plus grand que dans la position d'utilisation.

3. Attelage de remorque selon la revendication 2, **caractérisé en ce qu'**à l'organe formant axe de rotation (8) est relié solidairement en rotation un élément de butée (37), disposé à l'extérieur du dispositif à palier de rotation (11), qui, dans la position de rotation de l'organe formant axe de rotation (8), correspondant à la position de non-utilisation, traverse, pendant le pivotement du dispositif à palier de rotation (11), une voie de déplacement s'étendant à l'écart de la butée terminale (26) associée à la position d'utilisation, et, dans la position de rotation de l'organe formant axe de rotation (8) correspondant à la position d'utilisation, pendant le pivotement du dispositif à palier de rotation (11), traverse une voie de déplacement contenant la butée terminale (26) associée à la position d'utilisation.

4. Attelage de remorque selon l'une des revendications 1 à 3, **caractérisé en ce que** l'axe de pivotement (13) et les deux butées terminales (26, 27) sont disposés sur un dispositif à palier de pivotement (28) à monter de manière fixe sur le véhicule.

5. Attelage de remorque selon la revendication 4, **caractérisé en ce que** le dispositif à palier de pivotement (28) contient au moins une plaque de maintien (29, 30) disposée à côté du dispositif à palier de rotation (11), devant laquelle pivote le dispositif à palier de rotation (11), l'axe de pivotement (13) et les butées terminales (26, 27) étant disposés sur au moins une plaque de maintien (29, 30).

6. Attelage de remorque selon la revendication 5, **caractérisé en ce que** le dispositif à palier de pivotement (28) contient deux plaques de maintien (29, 30) disposées à distance l'une de l'autre, entre lesquelles est placé le dispositif à palier de rotation (11).

7. Attelage de remorque selon la revendication 6, **caractérisé en ce que** les deux plaques de maintien (29, 30) sont reliées entre elles par un pivot de pivotement (32) formant l'axe de pivotement (13).

8. Attelage de remorque selon l'une des revendications 5 à 7, **caractérisé en ce qu'**un organe de butée (33), formant la butée terminale (27) associée à la position de non-utilisation, fait saillie de la au moins une plaque de maintien (29, 30), dans le parcours de pivotement du dispositif à palier de rotation (11), lequel organe de butée est formé, dans le cas de deux plaques de maintien (29, 30), par un boulon de butée reliant les deux plaques de maintien.

9. Attelage de remorque selon la revendication 8, **caractérisé en ce que** le dispositif à palier de rotation (11) présente un agencement de trous oblongs (34) traversés par l'organe de butée (33), s'étendant en arc de cercle autour de l'axe de pivotement (13), dont une extrémité de trou oblong (35) vient heurter l'organe de butée (33), en position de non-utilisation du bras d'attelage (6).

10. Attelage de remorque selon la revendication 9, **caractérisé en ce que** dans la position de pivotement basse du dispositif à palier de rotation (11), l'autre extrémité de trou oblong (36) vient heurter l'organe de butée (33).

11. Attelage de remorque selon l'une des revendications 4 à 10, **caractérisé en ce que** le dispositif à palier de pivotement (28) contient une découpe de butée (38) dans laquelle l'élément de butée (37) pénètre pendant la rotation de l'organe formant axe de rotation (8) dans la position de rotation correspondant à la position d'utilisation, lorsque le dispositif à palier de rotation (11) prend sa position de pivotement basse, la découpe de butée (38) étant limitée dans la direction de pivotement par la butée terminale (26) associée à la position d'utilisation.

12. Attelage de remorque selon la revendication 11, **caractérisé en ce que** la découpe de butée (38) est disposée sur la au moins une plaque de maintien (29, 30).

13. Attelage de remorque selon la revendication 11 ou 12, **caractérisé en ce que** la découpe de butée (38) est formée par un agencement de fentes (39) avec une partie de pénétration (40) et une partie arquée (41) se raccordant à celle-ci, s'étendant en arc de cercle autour de l'axe de pivotement (13), et dont l'extrémité forme la butée terminale (26).

14. Attelage de remorque selon l'une des revendications 3 à 13, **caractérisé en ce que** sur l'organe formant axe de rotation (8) est disposée une pièce de tête (19) disposée à l'extérieur du dispositif à palier de rotation (11), laquelle porte au moins un élément de butée (37) sous la forme d'une saillie de butée latérale.

15. Attelage de remorque selon l'une des revendications 1 à 14, **caractérisé en ce que** le dispositif à palier de rotation (11) est réalisé en deux parties et est formé par deux parties de palier placées, depuis des côtés opposés, sur l'organe formant axe de rotation (8), avec un coussinet (12a, 12b) pour l'organe formant axe de rotation (8).

16. Attelage de remorque selon la revendication 15, **caractérisé en ce que** les deux parties de palier (11a, 11b) présentent, à côté du coussinet (12a, 12b), une plaque de palier (42) qui est montée sur l'axe de pivotement (13) et est disposée sur l'agencement de trous oblongs (34) en forme d'arc de cercle.

17. Attelage de remorque selon l'une des revendications 1 à 16, **caractérisé en ce que** le dispositif à moteur contient un moteur rotatif (15) associé à l'organe formant axe de rotation (8) en vue de sa rotation, disposé sur le dispositif à palier de rotation (11).

18. Attelage de remorque selon la revendication 17, **caractérisé en ce que** le moteur rotatif (15) est disposé, par son arbre moteur (18) coaxialement à l'organe formant axe de rotation (8) et est relié à celui-ci de manière à l'entraîner.

19. Attelage de remorque selon l'une des revendications 1 à 18, **caractérisé en ce que** le dispositif à moteur contient un moteur pivotant (16) associé au dispositif à palier de rotation (11) en vue de son pivotement.

20. Attelage de remorque selon la revendication 19, **caractérisé en ce que** l'unité d'entraînement (22) formée par le moteur pivotant (16) et une bielle (21) entraînée par celui-ci, agit de manière articulée, d'une part excentrée par rapport à l'axe de pivotement (13), sur le dispositif à palier de rotation (11) et est maintenue d'autre part par une partie solidaire du véhicule.

21. Attelage de remorque selon la revendication 19 ou 20, **caractérisé en ce que** l'unité de commande (14), commandant l'alimentation en courant du dispositif à moteur électrique, est prévue avec un dispositif de coupure pour couper l'alimentation en courant lorsque le bras d'attelage (6) parvient dans la position d'utilisation et dans la position de non-utilisation, en fonction de l'augmentation de l'intensité du courant survenant ici du fait de la butée contre la butée terminale (26) ou (27) respective.

22. Attelage de remorque selon la revendication 21, **caractérisé en ce que** l'unité de commande (14) contient un dispositif d'ajustage qui, lorsque le bras d'attelage (6) se trouve dans la position d'utilisation ou dans la position de non-utilisation, remet en service l'alimentation en courant à intervalles de temps.

23. Attelage de remorque selon l'une des revendications 1 à 22, **caractérisé en ce qu'**elle comporte un bras porteur (43) portant un dispositif de branchement électrique (44) pour un câble électrique menant à la remorque, lequel bras porteur est articulé à un axe de rotation (45) fixe, en particulier sur le dispositif à palier de pivotement (28), le bras porteur (43) étant soutenu en position de non-utilisation du bras d'attelage (6), par celui-ci, vers le bas, et, lorsque le bras d'attelage (6) passe dans la position d'utilisation, il est dégagé du bras d'attelage (6) et repose d'une autre manière, ce qui fait que le dispositif de branchement (44) est accessible de l'extérieur.
